# FASCICULE DE BREVET EUROPEEN

(11) **EP 2 616 864 B1**
(45) Date de publication et mention de la délivrance du brevet: **19.04.2017**
(21) Numéro de dépôt: 11754427.0
(22) Date de dépôt: 12.09.2011
(51) Int. Cl.: H04N 5/365, H04N 5/33, H04N 5/347, H04N 5/3745, H04N 5/378, G02B 27/01, G02B 27/00, G02B 13/06

(54) **SYSTÈME OPTRONIQUE À VISION SUPRA-HÉMISPHÉRIQUE**
OPTRONIC SUPRA HEMISPHÄRE VISION SYSTEM
OPTRONIC SUPRA HEMISPHERIC VISION SYSTEM

(30) Priorité: 14.09.2010 FR 1003654
(43) Date de publication de la demande: 24.07.2013
(73) Titulaire: THALES, 92400 Courbevoie (FR)
(72) Inventeur: MIDAVAINE, Thierry, F-75006 Paris (FR)
(74) Mandataire: Henriot, Marie-Pierre
(86) Numéro de dépôt international: PCT/EP2011/065721
(87) Numéro de publication internationale: WO 2012/034963

(56) Documents cités:
- EP-A2- 0 776 124
- WO-A1-2005/029865
- US-A- 5 023 725
- US-A1- 2004 169 726
- US-A1- 2005 046 715
- US-A1- 2008 151 084
- US-B1- 6 449 103

## Description

Le domaine de l'invention est celui de l'observation et de la surveillance pour la protection d'un véhicule, d'un convoi de véhicules, d'une plate-forme (terrestre, navale ou aéroportée), ou d'un site.

Cette observation ou surveillance est généralement assurée par un observateur ou un équipage embarqué dans une plate-forme ; elle peut être éventuellement télécommandée.

Parmi les dispositifs existant pour assurer cette mission de surveillance, on peut citer les dispositifs suivants qui utilisent :
- une couronne d'épiscopes ou de périscopes qui traversent les blindages, parois et moyens de protection dans les chars blindés, ou
- une caméra montée sur une monture orientable selon deux axes, de type PTZ, acronyme de l'expression anglo-saxonne Pan Tilt Zoom, qui ne permet pas de couvrir l'ensemble du panorama instantanément ou
- un réseau de plusieurs caméras réparties et couvrant le panorama, qui nécessitent de gérer un réseau de flux vidéo, ou
- un capteur à barrette, au foyer d'une optique, le tout balayant sur 360° la scène dans le plan équatorial par exemple à des cadences de 1 à 10Hz

Ces moyens de type optronique délivrent des signaux qui sont éventuellement traités puis restitués sur des écrans. D'autres systèmes optroniques sont décrits dans les documents US-A-5 023 725, US-B1-6 449 103, US-A1-2008/151084, US-A1-2004/169726, EP-A2-0 776 124, WO-A1-2005/029865 et US-A1-2005/046715.

Ces moyens sont très insuffisants :
- soit parce qu'ils ne permettent pas d'avoir une perception complète de tout l'environnement pouvant présenter de nombreux angles morts ; c'est important par exemple pour un véhicule se déplaçant en milieu urbain et pouvant manoeuvrer également dans différentes directions, avec des menaces pouvant provenir de différentes directions,
- soit parce que la résolution est très insuffisante par rapport aux dimensions angulaires des objets, évènements ou menaces à détecter compte tenu de la distance à laquelle il faut pouvoir les discriminer. Il s'agit en effet de :
   ❖ reconnaître jusqu'à une distance de 150 m, des tireurs isolés susceptibles d'être menaçants avec un lance-grenade (ou RPG acronyme de l'expression anglo-saxonne Rocket Propelled Grenade), ou qui peuvent se placer sur les toits des immeubles en milieu urbain,
   ❖ reconnaître des véhicules se déplaçant au sol, dans un rayon pouvant atteindre 500 m ; en milieu urbain il est rare d'aller au-delà, en milieu ouvert la détection est possible à des distances de 1500m,
   ❖ reconnaître des objets posés au sol tels que des mines (ou IED, acronyme de l'expression anglo-saxonne Improvised Explosive Device) : des objets de dimension de quelques dizaines de cm ou de m, situés à quelques dizaines de mètres doivent pouvoir être détectés afin de décider de les éviter en roulant,
- soit parce que la cadence de renouvellement est très insuffisante pour se substituer à une perception proche de la capacité humaine, c'est-à-dire pour avoir une perception continue en temps réel de l'environnement et de son évolution compte tenu de la vitesse de déplacement du véhicule et des décisions de réaction pouvant être prises par l'équipage. Il existe par exemple des dispositifs reposant sur l'emploi d'une optique associée à une caméra CCD, qui balaient le plan équatorial à 360° à des cadences de 1 à 10 Hz et sont limités en hauteur angulaire à une vingtaine de degrés : ces dispositifs reposent soit sur des petites matrices (2 Mpixel ou moins) pour être compatibles d'une cadence vidéo Haute Définition (HD 25 à 50 Hz), soit sur des grandes matrices supérieures à 2Mpixel mais limitées en cadence (de l'ordre de 1 à 10 Hz) ou encore sur des barrettes balayant les 360° qui sont elles aussi limitées à des fréquences de balayage de 1 à 10Hz.

Enfin tous ces moyens antérieurs sont limités à un fonctionnement de jour, en étant sensibles dans le domaine visible ou du proche infrarouge ou peuvent offrir une capacité de vision nocturne de type infrarouge thermique insuffisante pour apprécier les menaces et délivrant de jour des images moins facilement exploitables que les images données par les caméras visibles ou proche infrarouges.

En conséquence, il demeure à ce jour un besoin pour un système donnant simultanément satisfaction à l'ensemble des exigences précitées, en termes de champ de vision, de résolution, de permanence d'observation, de cadence et de vision jour-nuit.

Plus précisément l'invention a pour objet un système optronique vidéo de vision supra hémisphérique d'une scène, qui comprend un capteur avec une optique supra hémisphérique et un détecteur matriciel situé dans le plan focal de l'optique, une unité de traitement des images captées et des moyens d'affichage des images traitées. Il est principalement caractérisé en ce que :
- le détecteur matriciel est à cadence vidéo et comprend :
   i. L lignes x C colonnes de pixels, avec L et C > 2000, chaque pixel étant à double échantillonnage corrélé et apte à assurer la conversion charges-tension, et
   ii. 2 C éléments de conversion analogique-numérique (ou CAN) de tension parallélisés, respectivement associés à chaque colonne de la matrice du détecteur, chaque élément de conversion comportant lui-même un premier CAN à faible niveau en entrée et fort gain et un deuxième CAN à niveau élevé en entrée et faible gain,
- en ce que l'optique supra hémisphérique présente une focale f contrôlée en fonction de l'angle de site, la focale étant la plus longue dans le plan équatorial, et a une ouverture numérique f/D comprise entre 0,9 et 1,6, D étant le diamètre de l'optique,
- des moyens d'adaptation de la dynamique de l'image captée à la dynamique de la scène, par un contrôle du temps d'exposition, et/ou du gain,
- et en ce que le détecteur comportant une température, un temps d'exposition et des bruits temporels prédéterminés, l'image captée et les moyens d'affichage ayant une dynamique prédéterminée, l'image captée ayant des hautes et basses fréquences spatiales et la scène ayant un éclairement prédéterminé, l'unité de traitement comprend :
   i. des moyens de correction des non uniformités du détecteur au moyen de tables de pilotage adaptées en fonction de la température et du temps d'exposition du détecteur,
   ii. des moyens de sommation pondérée de plusieurs pixels voisins,
   iii. des moyens d'adaptation de la dynamique de l'image captée à la dynamique de la scène, des moyens de compression de la dynamique de l'image captée en fonction des bruits temporels du détecteur, croissant avec l'éclairement de la scène, des moyens d'adaptation de la dynamique de l'image captée à la dynamique de l'écran d'affichage et/ou à celle de l'oeil, par restitution des hautes fréquences spatiales de l'image et compensation des basses fréquences spatiales.

Selon une caractéristique de l'invention, il comprend des moyens de définition de la focale de l'optique et des moyens de correction des distorsions en fonction d'un secteur de la scène observée.

Le capteur assure une couverture hémisphérique ou supérieure, avec une résolution adaptée aux dimensions et positions des menaces potentielles. Le capteur multi-mega pixels peut être lu à cadence vidéo ou même à des cadences supérieures avec un niveau de sensibilité ajustable depuis des niveaux d'éclairement de jour jusqu'à des niveaux d'éclairement de nuit en étant compatible avec la présence de sources lumineuses dans la scène. Ce dernier aspect est avantageux pour des emplois en zone urbaine.

Un ensemble de traitements répartis dans le capteur et dans le calculateur permet de délivrer des images sur le ou les écrans des IHM (Interfaces Homme Machine) avec des incrustations adaptées aux missions des utilisateurs.

L'invention a aussi pour objet une plate-forme apte à se déplacer, équipée d'un système optronique vidéo à vision supra hémisphérique tel que décrit.

L'invention permet ainsi à l'utilisateur d'avoir la perception de son environnement extérieur en temps réel tout en restant au sein de la plate-forme sans lui demander de sortir. En particulier dans un contexte militaire ou d'environnement dangereux le système concourt à protéger l'équipage. Il permet en effet d'offrir à l'utilisateur une vision totale jour et nuit temps réel à cadence vidéo, avec une résolution adaptée à la dimension angulaire de ces menaces compte tenu de leur distance et de leurs positions potentielles dans le panorama.

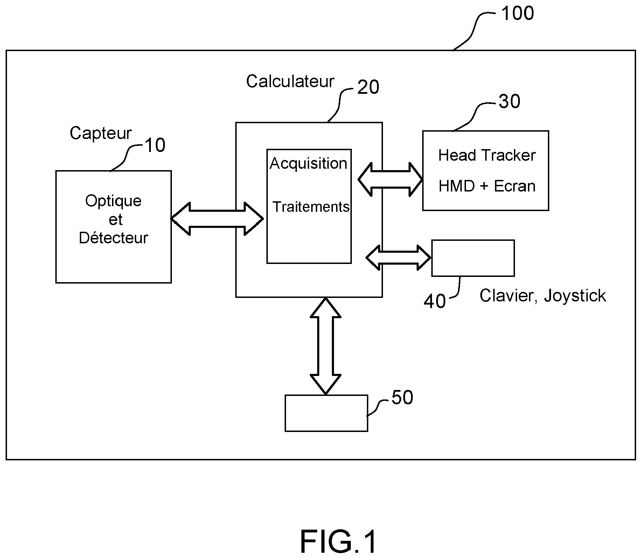

D'autres caractéristiques et avantages de l'invention apparaîtront à la lecture de la description détaillée qui suit, faite à titre d'exemple non limitatif et en référence à la figure 1 qui représente schématiquement un exemple de système selon l'invention.

Le système 100 selon l'invention montré figure 1, comprend un capteur 10, un calculateur 20, une interface IHM 30 destinée à l'utilisateur telle qu'un dispositif d'affichage d'images et une interface IHM 40 telle qu'un dispositif de contrôle par l'utilisateur de certaines fonctions du système.

De plus le système peut recevoir des informations provenant de la plate-forme ou d'autres équipements 50 intégrés sur la plate-forme, comme la mesure de sa vitesse de déplacement, sa localisation et son orientation sur une cartographie (délivrées par exemple par un système GPS), ou encore la réception d'informations donnant la localisation des soldats ou d'autres plates-formes mobiles amies par exemple.

Il est installé à bord d'une plate-forme telle qu'un véhicule terrestre.

Le capteur 10 comporte une optique et un détecteur.

L'optique très ouverte, à résolution variable dans le champ couvre un domaine angulaire supérieur à un hémisphère dont l'axe est orienté vers le zénith. L'optique peut en outre présenter d'importantes distorsions afin d'offrir des résolutions augmentées dans certains domaines angulaires, par exemple dans le plan équatorial, pour augmenter sa portée.

Cette optique est par exemple de type :
- Fish eye avec une focale de 4.5 mm et 12 pixels/° _{;} 1 ou 2 optiques suffisent pour couvrir un champ de 360°,
- Fish eye avec une focale de 8 mm et 21 pixels/° sur 120 °; il faut 3 optiques pour couvrir un champ de 360°,
- Optique à très forte distorsion ou de type Panomorphe™ permettant de couvrir un champ de 360°, avec une résolution radiale variable suivant l'angle de site pouvant aller de 20 à 22 pixels/° ou plus en résolution radiale (1 telle optique suffit) ; l'orientation verticale d'une telle optique permet d'avoir une résolution tangentielle croissante avec la diminution de l'angle de site et meilleure pour les sites négatifs. L'optique Panomorphe™ est un objectif anamorphique grand-angle développé par la société Immervision et décrit dans les brevets FR 2826221 et FR 2827680, qui contrôle les distorsions et produit une image agrandie couvrant un champ de vision d'au moins 360 degrés par 180 degrés. La géométrie de l'image formée par une telle optique (adaptée à notre besoin comme indiqué) sur le détecteur, montre une couverture de 360° en gisement ou dans un plan équatorial, par 220° en site ou dans les plans méridiens.

La couverture angulaire dans les plans méridiens sur 220° peut être différente en fonction de l'azimut pour optimiser l'implantation sur le véhicule et augmenter la couverture par exemple sur le secteur avant et ¾ arrière gauche et droit où le véhicule peut progresser ou manoeuvrer. Cette optique supra hémisphérique présente une focale f variable définie en fonction de l'angle de site, la focale étant la plus longue dans le plan équatorial, et avec une ouverture numérique f/D comprise entre 0,9 et 1,6, D étant le diamètre de l'optique.

Le détecteur fonctionne à cadence vidéo (25 à 50 Hz) ou supérieure dans le visible ou le proche infrarouge de jour comme de nuit et comporte au moins 5 Mega pixels. Il comporte par exemple 2560 lignes (L) x 2160 colonnes (C) de pixels. Le détecteur de type CMOS permet en outre des modes de lecture et d'affichage et des contrôles de temps d'exposition adaptés aux conditions comme on le verra plus loin. Enfin ce type de détecteur peut directement délivrer un signal numérique.

Le détecteur situé dans le plan focal est typiquement une matrice CMOS 4T (à 4 transistors dans le pixel) ou plus, fonctionnant à 25Hz, à faible bruit (inférieur à 2 électrons) et grande dynamique (supérieure à 80dB). Chaque pixel est à double échantillonnage corrélé et la conversion charges-tension est réalisée dans chaque pixel, ce qui assure au détecteur un très faible niveau de bruit et une grande dynamique instantanée. En outre le contrôle du temps d'exposition (ou d'intégration), depuis des durées inférieures à 10µs à des durées de 40ms par exemple, lui permet de fonctionner de jour et de nuit. En ambiance de nuit, à très faible niveau, il est possible d'augmenter le temps d'exposition par exemple à 100ms et de réduire la cadence images par exemple à 10Hz afin d'améliorer le S/B de l'image restituée.

Le détecteur fonctionne dans le proche IR (650 nm - 1µm), qui peut être préféré au domaine visible pour une vision de nuit, afin d'exploiter les flux photoniques et les contrastes des albedos supérieurs de cette bande.

A chaque colonne de la matrice sont associés par exemple deux CAN parallélisés identiques, l'un ayant une entrée à faible gain à haut niveau de lumière permettant de coder le niveau saturant des pixels (par exemple 35000 électrons) et l'autre ayant une entrée à fort gain à bas niveau de lumière grâce à un gain (codant les photoélectrons avec un niveau de quantification inférieur au bruit ou inférieur à 1 électron sur une dynamique de N bits). Ces deux gains sont éventuellement contrôlables : ceci permet d'assurer le codage du signal sans perte de la sortie des pixels de chaque colonne pour différents niveaux de lumière. En plus de cette dynamique instantanée et de cette dynamique de gains des sorties du détecteur, on a une dynamique des temps d'exposition contrôlable permettant de faire varier le temps d'exposition entre 10µs et 40 ms voire même 100ms en réduisant la cadence à 10Hz. Ce pilotage en temps réel des niveaux du temps d'exposition, du gain faible et du niveau de gain fort sortant en parallèle est obtenu soit par l'IHM 40 qui commande ces niveaux, soit par un automatisme assuré par un processeur dans la caméra. L'opérateur ajuste par deux curseurs contrôlant la brillance et le contraste de l'image restituée sur écran de la manière suivante :
- en passage en mode manuel la caméra conserve les derniers réglages générés par le mode automatique,
- ou l'opérateur choisit d'initialiser la caméra à son état « par défaut » où la caméra est réglée avec un temps de pose minimum de 10µs et un gain faible. S'il constate qu'il ne peut apprécier le signal dans les zones sombres de l'image il commande une brillance plus forte par une commande d'offset sur le signal. Si le signal ne sature pas dans les zones brillantes utiles de l'image, il commande un contraste plus fort. Cette commande de contraste agit : sur la commande du temps d'exposition en l'augmentant dans la limite de 40ms, puis sur le gain employé. A très fort gain (pour des conditions d'éclairement très faible), s'il constate un bruit trop important dans les zones sombres de l'image, il peut encore augmenter le temps d'exposition au-delà de 40ms et commander le mode de sommation des pixels adjacents (ou « binning » en anglais) 2x2 puis 4x4. De manière préférée cette sommation ou « binning » peut être pondérée par le niveau de bruit de chaque pixels. Il réajuste si nécessaire le niveau de brillance afin d'ajuster les zones sombres de l'image à un niveau juste au-dessus du noir de l'écran. Il peut ainsi fonctionner à haut débit, à 25 images par seconde, soit de l'ordre de 138 Mpixel/sec sans dégrader le S/B dans la dynamique de l'image.

Le système 100 assure les fonctions suivantes :
- Une correction en temps réel des non uniformités du détecteur, réalisée par un FPGA ou un DSP intégré au capteur 10 ou réalisée au niveau du calculateur 20. Elle effectue au moins la soustraction de l'offset, la soustraction du courant d'obscurité au moyen de tables de corrections adaptées en fonction de la température et du temps d'exposition du détecteur, et la division par une plage de luminance uniforme qui assure la correction des non uniformités de réponse des pixels. En plus le calculateur pourra prendre en compte les non linéarités de réponse pour chaque pixel et des non uniformités du niveau de bruit temporel de chaque pixel pour améliorer le rapport signal sur bruit global dans l'image ainsi restituée.
- Un contrôle de la cadence image réalisé par l'électronique de la caméra contrôlant le détecteur, soit automatiquement soit commandé manuellement par l'opérateur pour faire varier la cadence de 25 à 100 Hz. Un tel mode peut être très utile en roulant en ambiance diurne ou si les niveaux d'éclairement plus faible le permettent afin d'augmenter la fluidité des images et réduire le temps de latence,
- un mode « binning » pondéré de sommation des signaux S des pixels voisins pondérés par exemple avec l'inverse du bruit (1/B) de chaque pixel et en multipliant le tout par la somme des bruits. Ce mode « binning » pondéré peut être sur 2x2, 3x3 ou 4x4 pixels par exemple.
- Une sortie linéaire sur 16 bits du détecteur car une sortie linéaire sur 12 bits est insuffisante vis à vis de la dynamique de scène et de la dynamique du capteur ; la numérisation sur 2x11 bits est à la limite de la performance analogique du capteur et sur la finesse des opérations de correction de non uniformité. Le pixel est susceptible d'avoir un niveau de bruit RMS (acronyme de l'expression anglo-saxonne Root Mean Square) inférieur à 1 électron. Un bruit RMS de 0.5 électron a été mesuré sur les pixels les moins bruyants pour un signal numérique codé à 0.6 électron par pas et des niveaux de bruit plus faible sont sans doute accessibles. Les signaux les plus faibles peuvent être en fait avec un signal à 0 à l'obscurité totale, puis de 1 photoélectron sur un pixel ; donc un pas de codage inférieur à 1 électron voire inférieur au niveau de bruit RMS est appréciable pour le traitement du signal afin de limiter le bruit apporté par le codage numérique Ce bruit RMS de quantification est égal au pas de quantification divisé par √12. Ici ce bruit de quantification est égal à 0,6/√12=0.17 ce qui est effectivement petit devant le bruit RMS de 0.5 électron. Le pixel peut avoir un niveau saturant supérieur à 35000 électrons. Donc un codage linéaire sur 65536 niveaux ou 16 bits approche notre besoin. Un codage par deux convertisseurs de dynamique plus faible avec deux gains d'entrée différents peut être mieux adapté (codage à deux pentes). Ainsi le codage à faible gain sur 11 bits va coder les niveaux forts sur 2048 niveaux de 17 à 35000 électrons par pas de 17 électrons. Le codage à fort gain va coder depuis les niveaux les plus faibles adaptés au bruit dans l'obscurité (0.5 électron par exemple) à des niveaux supérieurs au carré du niveau minimum du convertisseur à faible gain soit 292 au minimum. En effet le bruit RMS d'un signal d'amplitude égal à N photo-électrons suivant une statistique décrite par la loi de Poisson a une amplitude égale à √/N ; ainsi à partir de ce niveau de 292 le bruit RMS devient inférieur au pas de quantification. Ainsi un codage de 0 à 1024 électrons peut être réalisé avec un pas de codage de 0.5 électron sous 11 bits pour la sortie à fort gain. Le rapport des gains entre la sortie fort gain et faible gain est ainsi de 35000/1024 soit 34. Une conversion sur 2x12 bits est préférable pour avoir de la marge par rapport à l'analyse précédente pour réaliser les opérations arithmétiques des corrections des non uniformités et de non linéarité en limitant l'impact des niveaux de quantification sur le bruit final résultant et pour permettre d'accéder à un niveau de bruit plus faible et à des niveaux de saturation plus forts potentiellement accessibles, - Une gestion de la table de conversion du signal en sortie (désignée « look up table » en anglais) après les opérations de correction de non uniformité et de non linéarité afin de comprimer les niveaux images corrigés par des lois différentes sur toute la dynamique de la scène : réponse à plusieurs pentes, réponse en racine, réponse logarithmique, égalisation d'histogramme par exemple. Cela permet de conserver la dynamique du signal tout en réduisant avec un minimum de perte le débit de données.
- Lecture et affichage haute cadence des régions d'intérêt pilotées par un automatisme ou par l'interface homme machine 40. Ces régions d'intérêt sont définies de différentes manières en fonction de la mission, des opérations réalisées par chaque homme et de l'état du véhicule soit en train de rouler soit en position fixe. Par exemple, un chef d'engin surveillera les secteurs de menaces potentielles, un tireur pourra employer une image couvrant le secteur de sa direction de visée, un pilote de véhicule pourra employer une image couvrant le secteur avant du véhicule en roulant (ou secteur arrière en cas de marche arrière ou pour avoir une fonction rétroviseur). En cas de progression du véhicule, un logiciel de traitement d'image par l'analyse du flot optique peut afficher automatiquement les secteurs nouvellement découverts de la scène pour le chef d'engin. Dans le cas du véhicule à l'arrêt un logiciel de traitement d'image peut automatiquement détecter les évènements dans la scène (apparition, disparitions, détection de mouvements) en générant des alertes pour l'équipage, des plots de détection et des pistes sur un écran de situation présentant l'environnement du véhicule et en générant ainsi des images à haute cadence et à pleine résolution pour permettre à l'opérateur d'apprécier s'il y a ou non une menace et engager la réaction. Enfin le véhicule ou le réseau dans lequel il s'inscrit peut être équipé d'autres capteurs susceptibles de générer des alertes et des désignations d'objectif pour lesquels notre système va pouvoir délivrer une image du secteur angulaire aux opérateurs.

Le capteur 10 et le calculateur 20 assurent des fonctions de traitement en temps réel de différents types :
- Traitements à bas niveau des signaux issus du détecteur afin de traiter les sources de bruit et de restaurer dans leur plus grande dynamique les signaux.
- Traitement de compensation des distorsions de la combinaison optique et du détecteur par des moyens algorithmiques exploitant la définition de la focale de l'optique en fonction du secteur de l'image affichée, afin de délivrer sur un écran 30, des images ou des sous images en fonction des angles de sites et gisements couverts effectivement par chaque élément d'image ou pixel.

- Traitements des images en cohérence avec les informations de la plate-forme et en fonction de l'environnement pour assurer des fonctions variées telles que détection, génération d'alarme incrustée dans l'image affichée selon le référentiel de la plate-forme.
- Traitements d'adaptation de la dynamique de l'image détectée à celle des moyens d'affichage et/ou à celle de l'oeil, pour restituer les images sur ces écrans ou interfaces hommes machines 30, en répondant aux besoins ergonomiques et opérationnels des utilisateurs. Ainsi par exemple le système détecte les éclairements crêtes, ou les suréclairements saturant les pixels, ponctuels ou quasi ponctuels dans l'image. Ils sont à associer par exemple au Soleil de jour, aux lampadaires et phares de nuit. Ces zones sont affichées en blanc sur l'image et ne contribuent pas au contrôle automatique du temps d'exposition et du gain décrit précédemment. Par ailleurs, en cas de très forte dynamique de la scène, par exemple en présence de zones en plein soleil et simultanément de zones sombres dans l'ombre, l'affichage de l'image restitue les fréquences spatiales élevées (les détails de l'image) et compense les variations de luminances à basse fréquence par exemple par la technique du masque flou ou par normalisation multi-zone ou par filtrage par ondelettes.

Les traitements réalisés par le système 100, et répartis entre le capteur 10, le calculateur 20 et l'IHM 30 et 40 sont les suivants :
- L'optique du capteur comportant en outre un diaphragme, commande de l'ouverture et fermeture du diaphragme (éventuel) du capteur, contrôle en température du capteur, désembuage et dégivrage du dioptre frontal de l'optique, commande de focalisation de l'optique.
- Commande des temps d'exposition,
- Commande du gain du détecteur,
- Gestion des affichages des images de type bandeau panoramique, radar, loupe sur des secteurs de l'image ou zones d'intérêt avec correction des distorsions et des mouvements véhicules.
Ces commandes des temps d'exposition, du gain du détecteur, des affichages, sont par exemple réalisées successivement. Par défaut le diaphragme du capteur est par exemple fermé et le temps d'exposition et le gain sont au minimum ; on fait alors l'histogramme de l'image, qui est en l'occurrence une image noire. Puis on ouvre le diaphragme, et on fait l'histogramme de l'image obtenue en vérifiant qu'il est étalé du niveau le plus bas jusqu'au niveau le plus haut. Puis le diaphragme étant ouvert, on augmente le temps d'exposition : si ce n'est pas suffisant (c'est-à-dire si l'histogramme n'est pas convenablement étalé), on augmente encore le temps d'exposition et éventuellement le gain. On peut partir à l'inverse d'une image blanche, totalement saturée. Comme indiqué plus haut, on peut également supprimer le diaphragme et ajuster le temps d'exposition et le gain. On peut aussi utiliser un filtre que l'on applique à l'optique pour atténuer le signal et/ou limiter la bande spectrale.

On peut également citer comme traitements réalisés par le système 100, et répartis entre le capteur 10, le calculateur 20 et l'IHM 30 et 40 :
- Incrustation des données de contexte dans l'image (Nord, Direction du vecteur vitesse, cartographie, positions des amis, zones de menaces...).
- Détection automatique des évènements, mouvements et nouveautés dans l'image (issus de la scène) afin de générer des alarmes et les incruster dans l'image restituée.
- Affichage d'images fenêtrées avec correction des distorsions et des mouvements du véhicule.
- Réalisation du blindage transparent avec des lunettes micro afficheur collimatées, portées sur le casque et commandées par le contrôle d'orientation de la tête de l'utilisateur dans le référentiel terrestre porté par le véhicule.
- Fonction d'affichage sous forme de mosaïque, dans le référentiel terrain de l'ensemble des images acquises du sol (ou en 3 D du panorama terrestre) lors d'un déplacement et restitution de ces images dans le référentiel terrain ou véhicule.
- Distribution des images et d'incrustations délivrées par chaque utilisateur au reste de l'équipage par exemple pour permettre au chef de véhicule d'indiquer la direction où le pilote doit s'engager ou indiquer au tireur les zones à surveiller avec son moyen de visée.
- En déplacement, détourage des zones de l'image nouvellement démasquées, par un traitement automatique détectant les discontinuités du flot optique dans l'image ou au moyen d'un clavier ou d'un joystick par l'opérateur.
- Emission de désignations d'objectifs vers des systèmes d'armes par exemple.

Le capteur 10 étant solidaire du véhicule, le calculateur 20 est de préférence pourvu de moyens pour réaliser :
- Une stabilisation de l'image dans un référentiel inertiel porté (écran monté sur véhicule) ou situation de zoom avec un grandissement >1, au moyen d'un logiciel de stabilisation d'image sur référence inertielle ou sur détection des mouvements globaux de l'image.
- Une sortie directe avec un retard limité pour afficher les images sur un écran collimaté avec un grandissement de 1, solidaire du véhicule (même référentiel que le véhicule).
- Une sortie compensant des mouvements relatifs entre le capteur et l'écran collimaté (mouvement tourelle, plate-forme senseur...) et traitant les retards entre l'acquisition et l'affichage des images,
- Une sortie compensant les mouvements relatifs de la tête de l'utilisateur vis-à-vis de la plate-forme au moyen d'un dispositif « Head Tracker » monté sur la tête et regardant des points de référence dans la cabine, ou monté dans la cabine, ou encore d'un capteur inertiel monté sur la tête et d'un capteur inertiel monté sur le véhicule et d'un calcul différentiel entre les deux.

Cela offre la possibilité de consolider l'ensemble des images du sol acquises en roulant, permettant de rendre accessible une vision du sol ou de la chaussée y compris au pied ou sous le véhicule donnant ainsi une capacité de vision totale.

En outre, en roulant, la mesure des discontinuités du flot optique dans l'image, permet de détecter les zones démasquées et ainsi d'attirer l'attention de l'équipage sur les champs à surveiller susceptibles de démasquer de nouvelles menaces.

Les moyens d'affichage d'images sont soit spécifiques au système, soit utilisent des moyens d'affichage déjà existants pour lesquels des adaptations sont réalisées dans les traitements pour restituer des images exploitables. Ces moyens d'affichage des images peuvent être de type écran plat (ou multi écran plats) éventuellement tactile, écran collimaté, ou encore micro-écrans collimatés solidaire de la tête ou porté sur le casque. Ils peuvent être intégrés dans des systèmes d'observation existants tels que les épiscopes ou les moyens de restitution de caméra chef de char. Ces écrans et images affichées répondent aux besoins particuliers de chaque véhicule et de son équipage compte tenu de leurs missions.

Le système selon l'invention peut comporter 2 ou 3 capteurs afin de gérer les éventuels problèmes de masquage de la plateforme ou pour offrir des capacités de stéréovision.

Le système selon l'invention apporte une vision panoramique jour et nuit, en temps réel pour l'équipage d'un blindé. Il répond à de multiples besoins de perception de l'environnement et de protection de l'équipage vis-à-vis des menaces potentielles. Il permet la reconnaissance:
- d'un tireur isolé sur un immeuble de 25m de haut jusqu'à 150m de distance,
- d'un char à 500 m,
- d'un objet (Mine, IED) de 30cm posé au sol à 20 m.
Pour en priorité :
- assurer la protection de l'équipage,
- supporter la coopération des acteurs,
- acquérir des informations tactiques.

Il constitue une aide à l'homme et assure les fonctions suivantes :
- imagerie en roulant,
- veille automatique à l'arrêt : traitement automatique pour générer des alarmes sur la détection d'un mouvement ou mieux la classification d'une menace,
- enregistrement et compte rendu de la mission,
- incrustation en réalité augmentée de la situation issue du SIT (Système d'Informations Tactiques). En effet le véhicule s'inscrit dans un réseau partageant des informations du champ de bataille numérisé. A ce titre il reçoit et envoie au réseau des informations géolocalisées. De nombreuses informations pourraient être ainsi incrustées dans l'image panoramique restituée par notre système tel que la localisation des amis et la localisation des menaces faites par le réseau par exemple.
- serveur d'images en temps différé ou en temps réel.

Les avantages du système selon l'invention sont les suivants :
- vision jour et nuit
- protection contre de multi menaces telles que tireurs isolés, véhicules, mines
- portée de reconnaissance de véhicule jusqu'à 500 m
- système mono détecteur de 5.5 Mpixels
- vision supra hémisphérique temps réel
- optique panoramique à résolution adaptée suivant la hauteur
- facile à intégrer sur la plate-forme
- bas coût
- IHM facile d'utilisation
- capteur statique « furtif » car n'ayant pas d'élément tournant, ne permettant donc pas de savoir où nous observons
- traitements : BNL acronyme de l'expression Bas Niveau de Lumière, détection automatique, gestion du mouvement plateforme, localiser les zones démasquées avec la progression.

## Revendications

1. Système optronique (100) vidéo de vision supra hémisphérique d'une scène, qui comprend un capteur (10) avec une optique supra hémisphérique, et un détecteur matriciel situé dans le plan focal de l'optique, une unité de traitement (20) des images captées, des moyens d'affichage (30) des images traitées, **caractérisé en ce que** :
- le détecteur matriciel est à cadence vidéo et comprend :
i. L lignes x C colonnes de pixels, avec L et C > 2000, chaque pixel étant à double échantillonnage corrélé et apte à assurer une conversion charges-tension, et
ii. 2 C éléments de conversion analogique-numérique (ou CAN) de tension parallélisés, respectivement associés à chaque colonne de la matrice du détecteur, chaque élément de conversion comportant lui-même un premier CAN à faible niveau en entrée et fort gain, et un deuxième CAN à niveau élevé en entrée et faible gain,
- **en ce que** l'optique supra hémisphérique présente une focale f contrôlée en fonction de l'angle de site, la focale étant la plus longue dans le plan équatorial, et a une ouverture numérique f/D comprise entre 0,9 et 1,6, D étant le diamètre de l'optique,
- des moyens d'adaptation de la dynamique de l'image captée à la dynamique de la scène, par un contrôle du temps d'exposition, et/ou du gain,
- et **en ce que** le détecteur comportant une température, un temps d'exposition et des bruits temporels prédéterminés, l'image captée et les moyens d'affichage ayant une dynamique prédéterminée, l'image captée ayant des hautes et basses fréquences spatiales et la scène ayant un éclairement prédéterminé, l'unité de traitement comprend :
i. des moyens de correction de non uniformités du détecteur au moyen de tables corrections adaptées en fonction de la température et du temps d'exposition du détecteur,
ii. des moyens de sommation pondérée, de plusieurs pixels voisins,
iii. des moyens de compression de la dynamique de l'image captée en fonction des bruits temporels du détecteur, croissant avec l'éclairement de la scène, des moyens d'adaptation de la dynamique de l'image captée à la dynamique des moyens d'affichage et/ou à celle de l'oeil, par restitution des hautes fréquences spatiales de l'image et compensation des basses fréquences spatiales.

2. Système optronique vidéo de vision supra hémisphérique selon la revendication précédente, **caractérisé en ce que** l'optique du capteur comportant un diaphragme, il comprend des moyens d'adaptation de la dynamique de l'image captée à la dynamique de la scène, par un contrôle de l'ouverture du diaphragme.

3. Système optronique vidéo de vision supra hémisphérique selon l'une des revendications précédentes, **caractérisé en ce qu'**il comprend des moyens de définition de la focale et des moyens de correction des distorsions de l'optique en fonction d'un secteur de la scène à afficher, en fonction des besoins des utilisateurs du système ou en fonction de traitements automatiques réalisés par l'unité de traitement.

4. Système optronique vidéo de vision supra hémisphérique selon l'une des revendications précédentes, **caractérisé en ce que** l'unité de traitement comporte des moyens pour commander le temps d'exposition, le gain, et la cadence image du détecteur en fonction des conditions d'environnement, des moyens pour stabiliser l'image en fonction des mouvements du système ou des moyens d'affichage, des moyens pour détecter des régions de la scène nouvellement démasquées, pour détecter et pister des évènements ou mouvements dans la scène, pour incruster dans l'image affichée des informations issues d'autres interfaces (50).

5. Système optronique vidéo de vision supra hémisphérique selon l'une des revendications précédentes qui comporte 2 ou 3 capteurs (10).

## Patentansprüche

1. Optronisches Videosystem (100) mit supra-hemisphärischer Sicht einer Szene, das einen Sensor (10) mit einer supra-hemisphärischen Optik und einem in der Brennebene der Optik befindlichen Matrixdetektor, eine Verarbeitungseinheit (20) für erfasste Bilder und Anzeigemittel (30) für verarbeitete Bilder umfasst, **dadurch gekennzeichnet, dass**:
der Matrixdetektor Videotakt hat und Folgendes umfasst:
i. L Reihen x C Spalten von Pixeln, mit L und C > 2000, wobei jedes Pixel korrelierte Doppelabtastung hat und eine Ladung-Spannung-Wandlung gewährleisten kann, und
ii. zwei parallelisierte C-Analog-Digital-Spannungswandlerelemente (oder CAN), jeweils mit jeder Spalte der Matrix des Detektors assoziiert, wobei jedes Wandlerelement wiederum einen ersten CAN mit niedrigem Eingangspegel und hoher Verstärkung und einen zweiten CAN mit hohem Eingangspegel und niedriger Verstärkung umfasst,
dadurch, dass die supra-hemisphärische Optik eine Brennweite f hat, der in Abhängigkeit vom Ortswinkel geregelt wird, wobei die Brennweite in der Äquatorialebene am längsten ist, und eine numerische Apertur f/D zwischen 0,9 und 1,6 hat, wobei D der Durchmesser der Optik ist,
Mittel zum Anpassen der Dynamik des erfassten Bildes an die Dynamik der Szene durch Regeln der Belichtungszeit und/oder der Verstärkung,
und dadurch, dass, da der Detektor ein(e) vorbestimmte(s) Temperatur, Belichtungszeit und zeitliches Rauschen umfasst, das erfasste Bild und die Anzeigemittel eine vorbestimmte Dynamik haben, das erfasste Bild hohe und tiefe räumliche Frequenzen hat und die Szene eine vorbestimmte Ausleuchtung hat, die Verarbeitungseinheit Folgendes umfasst:
i. Mittel zum Korrigieren von Ungleichmäßigkeiten des Detektors mit Hilfe von Korrekturtabellen, die in Abhängigkeit von der Temperatur und der Belichtungszeit des Detektors angepasst sind,
ii. Mittel zur gewichteten Summierung von mehreren benachbarten Pixeln,
iii. Mittel zum Komprimieren der Dynamik des erfassten Bildes in Abhängigkeit vom zeitlichen Rauschen des Detektors, mit der Ausleuchtung der Szene zunehmend, Mittel zum Anpassen der Dynamik des erfassten Bildes an die Dynamik der Anzeigemittel und/oder an die des Auges, durch Wiederherstellen der hohen räumlichen Frequenzen des Bildes und Kompensieren der tiefen räumlichen Frequenzen.

2. Optronisches Videosystem mit supra-hemisphärischer Sicht nach dem vorherigen Anspruch, **dadurch gekennzeichnet, dass**, da die Optik des Sensors eine Membran umfasst, es Mittel zum Anpassen der Dynamik des erfassten Bildes an die Dynamik der Szene durch Regeln der Öffnung der Membran umfasst.

3. Optronisches Videosystem mit supra-hemisphärischer Sicht nach einem der vorherigen Ansprüche, **dadurch gekennzeichnet, dass** es Mittel zum Definieren der Brennweite und Mittel zum Korrigieren von Verzerrungen der Optik in Abhängigkeit von einem Sektor der anzuzeigenden Szene, in Abhängigkeit vom Bedarf des Benutzers des Systems oder in Abhängigkeit von automatischen Verarbeitungen umfasst, die von der Verarbeitungseinheit durchgeführt werden.

4. Optronisches Videosystem mit supra-hemisphärischer Sicht nach einem der vorherigen Ansprüche, **dadurch gekennzeichnet, dass** die Verarbeitungseinheit Mittel zum Regeln der Belichtungszeit, der Verstärkung, des Bildtakts des Detektors in Abhängigkeit von Umgebungsbedingungen, Mittel zum Stabilisieren des Bildes in Abhängigkeit von Bewegungen des Systems oder der Anzeigemittel, Mittel zum Erkennen von Regionen der neu demaskierten Szene, zum Erkennen und Verfolgen von Events oder Bewegungen in der Szene, zum Einfügen von anderen Schnittstellen (50) kommende Informationen in dem angezeigten Bild umfasst.

5. Optronisches Videosystem mit supra-hemisphärischer Sicht nach einem der vorherigen Ansprüche, das 2 oder 3 Sensoren (10) umfasst.

## Claims

1. Optronic supra-hemispheric vision video system (100) for a scene, which comprises a sensor (10) with a supra-hemispheric optical unit and a matrix detector which is located in the focal plane of the optical unit, a processing unit (20) for the captured images, means (30) for displaying the processed images, **characterised in that**:
the matrix detector is at video rate and comprises:
i. L rows x C columns of pixels, with L and C > 2000, each pixel having correlated double sampling and being capable of ensuring a charge/voltage conversion, and
ii. 2 C parallelised analogue/digital conversion elements (or ADC) for voltage, which are associated with each column of the matrix of the detector, respectively, each conversion element itself comprising a first ADC having a low input level and high gain and a second ADC with a high input level and low gain,
**in that** the supra-hemispheric optical unit has a focal length f which is controlled as a function of the elevation angle, the focal length being the longest in the equatorial plane, and has a digital opening f/D between 0.9 and 1.6, D being the diameter of the optical unit,
means for adaptation of the dynamic of the captured image to the dynamic of the scene by means of control of the exposure time and/or the gain,
and **in that**, the detector comprising a predetermined temperature, exposure time and temporal noises, the captured image and the display means having a predetermined dynamic, the captured image having high and low spatial frequencies and the scene having a predetermined illumination, the processing unit comprises:
i. means for correcting occurrences of non-uniformity of the detector using correction tables which are adapted as a function of the temperature and the exposure time of the detector,
ii. means for weighted summation of a plurality of adjacent pixels,
iii. means for compressing the dynamic of the image captured as a function of the temporal noises of the detector, increasing with the illumination of the scene, means for adapting the dynamic of the image captured to the dynamic of the display means and/or that of the eye, by means of restoring the high spatial frequencies of the image and compensating for the low spatial frequencies.

2. Optronic supra-hemispheric vision video system according to the preceding claim, **characterised in that**, the optical unit of the sensor comprising a diaphragm, it comprises means for adapting the dynamic of the captured image to the dynamic of the scene by means of control of the opening of the diaphragm.

3. Optronic supra-hemispheric vision video system according to either of the preceding claims, **characterised in that** it comprises means for defining the focal length and means for correcting the distortions of the optical unit as a function of a sector of the scene which is intended to be displayed, as a function of the requirements of the users of the system or as a function of automatic processing operations carried out by the processing unit.

4. Optronic supra-hemispheric vision video system according to any one of the preceding claims, **characterised in that** the processing unit comprises means for controlling the exposure time, the gain and the image rate of the detector as a function of the environmental conditions, means for stabilising the image as a function of the movements of the system or display means, means for detecting the regions of the scene which have been newly exposed, for detecting and tracking events or movements in the scene, for incorporating in the displayed image information originating from other interfaces (50).

5. Optronic supra-hemispheric vision video system according to any one of the preceding claims which comprises 2 or 3 sensors (10).
